# DEMANDE DE BREVET EUROPEEN

(11) **EP 1 147 942 A1**
(43) Date de publication de la demande: **24.10.2001**
(21) Numéro de dépôt: 01400904.7
(22) Date de dépôt: 09.04.2001
(51) Int. Cl.: B60Q 1/12

(54) **Système d'éclairage pour projecteur de véhicule automobile**

(30) Priorité: 19.04.2000 FR 0005055
(71) Demandeur: VALEO VISION, 93012 Bobigny Cédex (FR)
(72) Inventeur: Hamel, Xavier, 93012 Bobigny Cedex (FR); Jousseaume, Cyril, 93012 Bobigny Cedex (FR)

(57) **Abrégé**

La présente invention concerne un système d'éclairage pour projecteur de véhicule automobile comprenant sur un support (30) un module d'éclairage (10) comportant une source lumineuse et un réflecteur (11) pour émettre un faisceau lumineux de photométrie prédéterminée selon une direction générale définie par un axe optique (Ox) du module (10), le réflecteur (11) étant susceptible d'adopter une position angulaire comprise entre deux positions extrêmes, le module (10) étant mis en mouvement autour d'au moins un axe de rotation (40, 140) par au moins un moyen d'entraînement (20, 120) comprenant un moteur (21, 121) actionnant un organe de sortie (22, 122), l'organe de sortie (22, 122) entraînant le module (10) par l'intermédiaire d'un pignon denté (14) et étant susceptible d'être animé d'un mouvement de translation linéaire.

Selon la présente invention, l'organe de sortie (22, 122) comporte une crémaillère (23, 123) engrenant avec les dents du pignon denté (14, 114).

## Description

La présente invention concerne de manière générale les systèmes d'éclairage pour projecteurs de véhicules automobiles, et plus particulièrement les systèmes dans lesquels les projecteurs sont capables d'engendrer un faisceau lumineux orientable, par exemple en fonction de différents paramètres, et notamment un faisceau de virage décalé angulairement par rapport à l'axe longitudinal du véhicule.

On connaît du document FR-A-2 760 069 au nom de la Demanderesse un système d'éclairage comportant un projecteur pour l'émission d'un faisceau proche de type code, ainsi qu'un projecteur complémentaire pour l'émission d'un faisceau orientable de virage, les réflecteurs de ces deux projecteurs étant disposés dans un boîtier commun, le réflecteur du projecteur complémentaire de virage étant de type elliptique et étant monté pivotant par rapport à un axe du boîtier, avec une source et une lentille avec lesquelles il coopère pour l'émission du faisceau complémentaire de virage, le système comportant des moyens d'actionnement pour entraîner en pivotement le réflecteur, la source et la lentille autour de l'axe de façon à réaliser la fonction virage.

Le mode d'entraînement du réflecteur est constitué par un actuateur linéaire dont l'arbre de sortie est relié à un axe par une rotule, cet axe étant lui-même relié au réflecteur par une deuxième rotule. Un tel dispositif ne permet pas d'obtenir un pivotement du réflecteur qui soit une fonction linéaire de la course de translation du dispositif d'actionnement

On connaît également des systèmes de mise en mouvement de projecteurs constitués par des capsules, dont les débattements angulaires sont limités, et qui ne permettent pas d'obtenir des pivotements de réflecteur suffisants pour l'application à une fonction virage, ou qui présentent des vitesses d'actionnement irrégulières, des jeux de fonctionnement ou un manque de précision dans le positionnement du réflecteur.

Il existe d'autre part un besoin croissant d'apporter, dans un faisceau lumineux émis par un projecteur de véhicule automobile, une répartition photométrique dans des zones dites stratégiques, liées au fonctionnement du véhicule ou aux conditions particulières dans lesquelles il évolue, par exemple avant d'aborder un virage ou dans un virage, sur autoroute, en ville, par temps de pluie, etc.., chaque configuration photométrique correspondant à une fonction particulière.

La présente invention se place dans ce contexte et elle a pour but d'améliorer les projecteurs procurant une fonction supplémentaire, en proposant un module d'éclairage orientable dans plusieurs directions à l'aide de moyens simples, économiques, fiables et peu encombrants, la position angulaire du module d'éclairage pouvant être commandée avec précision tout en procurant des pivotements de grande amplitude du faisceau émis, de manière à pouvoir remplir une ou plusieurs fonctions d'éclairage particulières procurées par des faisceaux de répartition photométrique prédéterminée par rapport à l'axe longitudinal du véhicule.

La présente invention a donc pour objet un système d'éclairage pour projecteur de véhicule automobile comprenant sur un support un module d'éclairage comportant une source lumineuse et un réflecteur pour émettre un faisceau lumineux de photométrie prédéterminée selon une direction générale définie par un axe optique du module, le réflecteur étant susceptible d'adopter une position angulaire comprise entre deux positions extrêmes, le module étant mis en mouvement autour d'au moins un axe de rotation par au moins un moyen d'entraînement comprenant un moteur actionnant un organe de sortie, l'organe de sortie entraînant le module par l'intermédiaire d'un pignon denté et étant susceptible d'être animé d'un mouvement de translation linéaire.

Selon la présente invention, l'organe de sortie comporte une crémaillère engrenant avec les dents du pignon denté.

Selon d'autres caractéristiques avantageuses et non limitatives du projecteur selon l'invention :
- l'axe de rotation du module est perpendiculaire ou parallèle à l'axe optique du module d'éclairage,
- le mouvement de l'organe de sortie est guidé par une butée disposée du côté de l'organe de sortie opposé à celui par lequel il engrène avec le pignon denté,
- l'axe de rotation du module est vertical, ou il est incliné par rapport à la verticale, et de préférence il est incliné par rapport à la verticale d'un angle voisin de 15°.
- les deux positions angulaires extrêmes du module forment entre elles un angle d'environ 45°, ou un angle d'environ 90°,
- le module est mis en mouvement autour de deux axes de rotation non parallèles entre eux par des moyens d'entraînement comprenant chacun un moteur actionnant un organe de sortie entraînant le module par l'intermédiaire d'un pignon denté,
- l'un des axes de rotation est perpendiculaire à l'axe optique du module,
- les deux axes de rotation sont perpendiculaires à l'axe optique du module,
- le module est mis en mouvement autour de trois axes de rotation non parallèles entre eux par des moyens d'entraînement comprenant chacun un moteur actionnant un organe de sortie entraînant le réflecteur par l'intermédiaire d'un pignon denté,
- les trois axes de rotation du module sont perpendiculaires entre eux,
- le pignon denté fait partie d'un train d'engrenages multiplicateur ou réducteur d'effort,
- un organe de sortie est susceptible d'être animé d'un mouvement de rotation, et comporte une vis sans fin engrenant avec les dents du pignon denté,
- au moins un axe de rotation du module passe au voisinage immédiat du centre de gravité de l'ensemble à mettre en mouvement,
- le support est orientable en site et en azimut, par des moyens manuels ou électriques,
- le pignon denté est solidaire du module ou du support sur lequel est monté le module,
- le moteur est solidaire du module ou du support sur lequel est monté le module.

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1 représente une vue de côté d'un mode de réalisation du projecteur selon la présente invention ;
- la Figure 2 représente une vue de dessus du projecteur de la Figure 1, dans une première position ;
- la Figure 3 représente une vue de dessus du projecteur de la Figure 1, dans une deuxième position ;
- la Figure 4 représente une vue en coupe selon la ligne IV-IV de la Figure 1 ;
- la Figure 5 représente une vue en coupe d'une variante de réalisation du projecteur selon la présente invention ;
- la Figure 6 représente une vue en coupe d'une deuxième variante de réalisation du projecteur selon la présente invention, et
- la Figure 7 représente en vue de côté une variante du mode de réalisation du projecteur de la Figure 1.

On a représenté sur les Figures un module d'éclairage, désigné dans son ensemble par la référence 10, et un dispositif d'entraînement de ce module, désigné dans son ensemble par la référence 20. Le module 10 comporte de façon connue une source lumineuse (non représentée) et un réflecteur 11. Dans l'exemple représenté sur les Figures, le réflecteur 10 est du type elliptique, et dans ce cas il est associé à une lentille convergente 12 à l'aide d'une pièce intermédiaire 13, la source lumineuse étant placée au foyer objet du réflecteur, et le foyer de la lentille 12 étant sensiblement confondu avec le foyer image du réflecteur elliptique. Selon que l'on désire que le faisceau émis par le projecteur soit un faisceau route, un faisceau code ou un faisceau pouvant avoir l'une ou l'autre configuration, un cache de coupure (non représenté) peut être disposé au foyer de la lentille convergente 12, de manière fixe ou mobile.

Un tel module, comportant la source lumineuse, le réflecteur 11 et la lentille convergente 12, définit un axe optique Ox selon lequel le module est apte à émettre un faisceau lumineux, et le module est destiné à être installé dans un boîtier (non représenté) de projecteur, lui-même étant destiné à être implanté sur un véhicule automobile.

Le réflecteur 11, la source lumineuse, la lentille 12, la pièce intermédiaire 13 et éventuellement le cache de coupure forment un module monté pivotant sur un support 30 par l'intermédiaire d'une platine 41 autour d'un axe de rotation 40. Le module 10 est par ailleurs solidaire d'un pignon denté 14, centré sur l'axe de rotation 40 du module. Selon les cas, on pourra prévoir que le pignon 14, le réflecteur 11, la pièce intermédiaire 13, l'axe 40, la platine 41, et le cache de coupure lorsque ce dernier est monté de manière fixe, soient solidarisés les uns avec les autres, ou que certains de ces éléments ne forment qu'une seule pièce entre eux. De la même façon, l'axe de rotation 40 pourra avoir une direction quelconque par rapport à l'axe optique Ox du module 10. De préférence, cet axe de rotation 40 sera choisi de manière à être perpendiculaire à l'axe optique Ox du module 10. De préférence également, l'axe de rotation 40 sera choisi de telle manière qu'il passe au voisinage immédiat du centre de gravité du module 10 à mettre en mouvement, de façon à éviter que cet axe ne subisse des contraintes trop importantes, et à limiter le couple à fournir par le moteur d'entraînement.

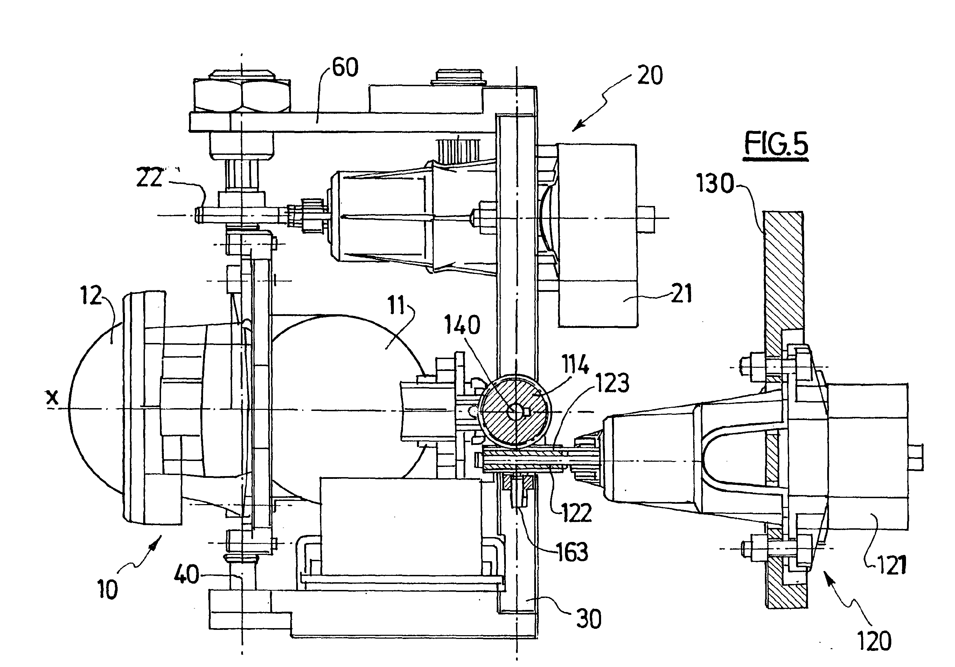

De manière plus précise, le module 10 est monté à pivotement autour de l'axe de rotation 40 sur un étrier 60 rigidement fixé sur le support 30 ou ne formant qu'une seule pièce avec lui. Il est actionné en rotation par le dispositif d'entraînement 20, qui comporte un moteur 21 commandant le mouvement d'un organe de sortie 22 destiné à engrener avec le pignon denté 14. Comme on le voit mieux sur la Figure 4, de manière à assurer la continuité de l'engrènement mutuel entre le pignon denté 14 et l'organe de sortie 22, ce dernier est guidé entre des portées 61 et 62 de l'étrier 60, et il est sollicité en direction du pignon denté par une butée 63, qui peut être réglable, elle aussi supportée par l'étrier 60. On est ainsi assuré que l'organe de sortie 22 reste toujours en contact d'engrènement avec le pignon denté 14.

Selon le mode de réalisation plus particulièrement représenté sur la Figure 4, l'organe de sortie 22 est de forme générale parallélépipédique, son mouvement est une translation linéaire, et il comporte sur l'un de ses côtés une crémaillère 23, engrenant avec les dents du pignon denté 14. Selon un autre mode de réalisation non représenté, l'organe de sortie 22 est de forme générale cylindrique, son mouvement est une rotation, et il comporte sur sa périphérie un filetage à pas non réversible, de manière à former une vis sans fin pour engrener avec les dents du pignon denté 14. Dans ce cas, les portées 61 et 62 ont une forme cylindrique concave de diamètre sensiblement égal au diamètre extérieur de l'organe de sortie 22, de même que la butée 63, qui peut éventuellement être omise.

Le moteur 21 est porté par le support 30, et il est commandé par une unité de gestion externe (non représentée) en fonction par exemple de l'orientation des roues avant du véhicule par rapport à l'axe longitudinal de celui-ci ou de l'angle de braquage du volant, et/ou d'autres paramètres tels que la vitesse du véhicule, l'état allumé ou éteint des projecteurs de faisceau route ou code, les conditions atmosphériques, l'environnement extérieur, etc.. Le moteur 21 peut être constitué d'un moteur pas à pas ou d'un moteur à courant continu.

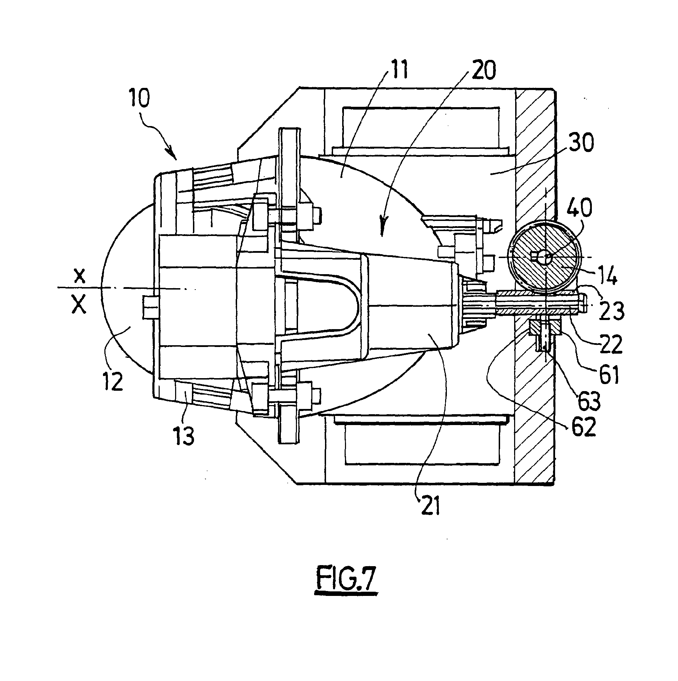

Selon la variante de réalisation représentée sur la Figure 7, le moteur 21 est porté par le module 10, en étant par exemple solidarisé à la pièce intermédiaire 13 ou au réflecteur 11, en étant commandé par la même unité de gestion externe en fonction des mêmes paramètres. Le moteur 21 commande le mouvement de l'organe de sortie 22, qui engrène avec le pignon denté 14 solidaire du support 30. L'organe de sortie 22 est guidé par des portées 61 et 62 solidaires de la pièce intermédiaire 13 ou du réflecteur 11, et il est sollicité en direction du pignon denté 14 par une butée 63, elle aussi supportée par la pièce intermédiaire 13 ou le réflecteur 11.

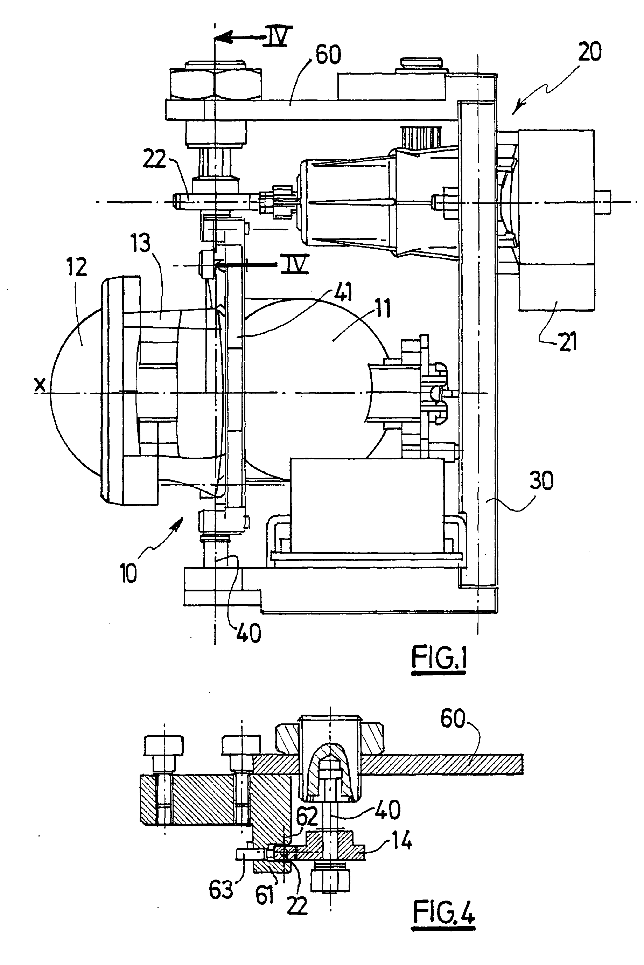

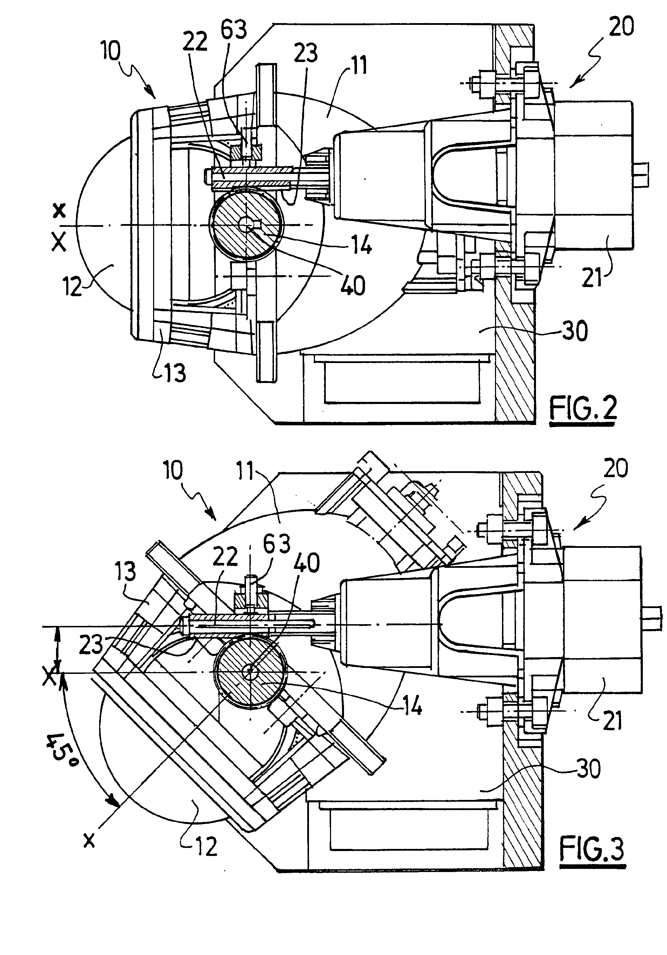

Le fonctionnement du projecteur qui vient d'être décrit se comprendra aisément. Dans des conditions normales, par exemple lorsque le véhicule circule en droite ligne, le module 10 est dans la position de repos représentée sur les Figures 1 et 2, dans laquelle l'axe optique Ox est parallèle à l'axe longitudinal X du véhicule. Lorsque l'unité de gestion externe commande l'alimentation du moteur 21, par exemple à l'approche d'un virage, il en résulte la mise en mouvement de l'organe de sortie 22, en translation ou en rotation.

Ce mouvement de l'organe de sortie 22 provoque la rotation du pignon denté 14 qui entraîne à son tour la mise en rotation du module 10. En fonction du diamètre du pignon denté 14, un même mouvement de l'organe de sortie 22 d'une amplitude donnée sera transformé en une rotation plus ou moins importante du module 10. Un diamètre plus faible du pignon denté 14 provoquera une rotation plus importante du module 10, pour une même amplitude de mouvement de l'organe de sortie 22. En choisissant le diamètre du pignon 14 et/ou l'amplitude de mouvement de l'organe de sortie 22, on pourra ainsi déterminer l'amplitude de la rotation du module 10.

Si par exemple le pignon denté 14 a un diamètre d'environ 18 mm, une translation totale de l'organe de sortie 22 d'environ 7 mm provoquera une rotation totale du module 10 d'environ 45°. Dans cette hypothèse, on pourra prévoir que la position représentée sur les Figures 1 et 2, où l'axe Ox du module 10 est parallèle à l'axe X du véhicule, l'organe de sortie 22 soit dans une position extrême de repos, et que la totalité de la course de l'organe de sortie soit utilisée pour faire tourner le module 10 à partir de cette position axiale vers un seul côté de l'axe X, par exemple entièrement vers l'extérieur du véhicule, jusqu'à une deuxième position extrême. Le faisceau du module 10 pourra ainsi être dirigé dans toute direction dont l'azimut est compris dans un angle de 0 à 45° sur l'un des côtés du véhicule.

Si cette fois le pignon denté 14 a un diamètre d'environ 9 mm, une translation totale de l'organe de sortie 22 d'environ 7 mm provoquera une rotation totale du module 10 d'environ 90°. Dans cette hypothèse, on pourra prévoir que la position représentée sur les Figures 1 et 2, où l'axe Ox du module 10 est parallèle à l'axe X du véhicule, l'organe de sortie 22 soit dans une position centrale de repos, et que la course de l'organe de sortie soit utilisée pour faire tourner le module 10 à partir de cette position axiale des deux côtés, jusqu'à des positions extrêmes situées de part et d'autre de cette position centrale, et par exemple symétriques par rapport à cette position centrale de repos. Le faisceau du module 10 pourra ainsi être dirigé dans toute direction dont l'azimut est compris dans un angle de 45° à droite à 45° à gauche du véhicule.

Dans le mode de réalisation qui vient d'être décrit, l'axe de rotation 40, lorsque le module 10 est en place sur le véhicule, est vertical. On peut bien sûr prévoir que l'axe de rotation 40 fasse un angle déterminé avec la verticale. On pourra par exemple disposer l'axe de rotation pour qu'il forme un angle de 15° avec la verticale. Dans ce cas, le module orientable selon la présente invention équipera avantageusement un projecteur complémentaire assurant la fonction virage pour un véhicule équipé de projecteurs de type code européen. En effet, le faisceau émis par le module orientable suivra le bord supérieur de la coupure imposée par la réglementation lorsque le module sera allumé à l'approche d'un virage et mis en mouvement vers le côté du faisceau où la coupure, selon la réglementation européenne, est relevée.

Le support 30 est fixé sur une partie du boîtier par l'intermédiaire de liaisons réglables, permettant le réglage du module 10 aussi bien en site qu'en azimut, de façon à le mettre en conformité avec les dispositions réglementaires lors de l'installation du projecteur sur le véhicule.

On pourra également prévoir, comme on l'a représenté sur la Figure 5, que le support 30 soit lui-même monté pivotant par rapport à une base 130 autour d'un axe 140, le support 30 étant solidaire d'un pignon denté 114, centré sur l'axe de rotation 140 du support 30. De préférence, l'axe 140 sera choisi de telle sorte qu'il soit perpendiculaire à l'axe optique Ox du module 10 et à l'axe de rotation 40 du module 10. On pourra aussi prévoir que seulement l'un des axes de rotation 40 ou 140 soit perpendiculaire à l'axe optique Ox du module d'éclairage 10. Comme précédemment, l'axe de rotation 140 sera choisi avantageusement de telle manière qu'il passe au voisinage immédiat du centre de gravité de l'ensemble à mettre en mouvement, de façon à éviter que cet axe ne subisse des contraintes trop importantes, et à limiter le couple à fournir par le moteur d'entraînement.

De manière plus précise, le support 30 est monté à pivotement autour de l'axe de rotation 140 sur un étrier (non représenté) rigidement fixé sur la base 130. Il est actionné en rotation par un dispositif d'entraînement 120, qui comporte un moteur 121 commandant le mouvement d'un organe de sortie 122 destiné à engrener avec le pignon denté 114. Comme dans le mode de réalisation décrit plus haut, de manière à assurer la continuité de l'engrènement mutuel entre le pignon denté 114 et l'organe de sortie 122, ce dernier est guidé entre des portées (non représentées) de la base 130, et il est sollicité en direction du pignon denté 114 par une butée 163, qui peut être réglable, elle aussi supportée par la base 130. On est ainsi encore assuré que l'organe de sortie 122 reste toujours en contact d'engrènement avec le pignon denté 114.

De préférence, l'organe de sortie 122 est de forme générale parallélépipédique, son mouvement est une translation linéaire, et il comporte sur l'un de ses côtés une crémaillère 123, engrenant avec les dents du pignon denté 114. Il peut aussi être de forme générale cylindrique, son mouvement étant alors une rotation, et comporter sur sa périphérie un filetage à pas non réversible, de manière à former une vis sans fin pour engrener avec les dents du pignon denté 114.

Le moteur 121 est porté par la base 130, et il est également commandé par une unité de gestion externe (non représentée), qui peut être celle qui commande le moteur 21, en fonction de paramètres tels que la vitesse du véhicule, l'état allumé ou éteint des projecteurs de faisceau route ou code, les conditions atmosphériques, l'environnement extérieur, etc.. Le moteur 121 peut également être commandé manuellement par le conducteur du véhicule à l'aide d'un commutateur ou d'un rhéostat au tableau de bord, et être constitué d'un moteur pas à pas ou d'un moteur à courant continu.

Comme précédemment, on peut prévoir en variante que le moteur 121 soit porté par le support 30 sur lequel est monté, indirectement, le module 10, et commande le mouvement de l'organe de sortie 122 qui engrène avec le pignon denté 114 solidaire de la base 130.

Un tel système de commande des mouvements du projecteur selon deux axes de rotation perpendiculaires entre eux permet ainsi d'orienter le module 10 dans une direction quelconque, aussi bien en site qu'en azimut, pour remplir de nombreuses fonctions additionnelles.

Par exemple, on appelle α l'angle d'azimut, c'est à dire l'angle de déviation dans la direction horizontale, et β l'angle de site, c'est à dire l'angle de déviation dans la direction verticale, ces angles étant comptés à partir d'un axe d'origine constituée par l'axe X du véhicule.

Les fonctions suivantes peuvent alors être remplies :
- A. L. : Eclairage par temps de pluie
- C. L. : Eclairage en campagne
- B. L. : Eclairage en virage
- T. L. : Eclairage en ville
- M. L. : Eclairage sur autoroute
- O.L. : Eclairage des panneaux indicateurs
en donnant aux angles d'azimut α et de site β les valeurs approximatives suivantes, pour les ensembles d'éclairage situés à l'avant droit et à l'avant gauche du véhicule. Pour l'angle d'azimut α, les valeurs positives sont comptées pour un faisceau éclairant vers l'extérieur du véhicule, et pour l'angle de site β, les valeurs positives sont comptées pour un faisceau éclairant vers le haut.

| Fonctions Supplémentaires | | Module Droit | | Module Gauche | |
|---|---|---|---|---|---|
| | | α | β | α | *β* |
| A. L. | Trafic à droite | + 45° | + 0,5° | + 45° | - 0,5° |
| | Trafic à gauche | + 45° | - 0,5° | + 45° | + 0,5° |
| C.L. | | 0 | + ou - | 0 | + ou - |
| B.L. | Virage à droite | De 0 à + 45° | + ou - | 0 ou (de 0 à - 45°) | + ou - |
| | Virage à gauche | 0 ou (de 0 à - 45°) | + ou - | de 0 à + 45° | + ou - |
| T.L. | | + 30° | + ou - | + 30° | + ou - |
| M. L. | | 0 | +0,5° | 0 | +0,5° |
| O.L. | | 0 | +5° | 0 | +5° |

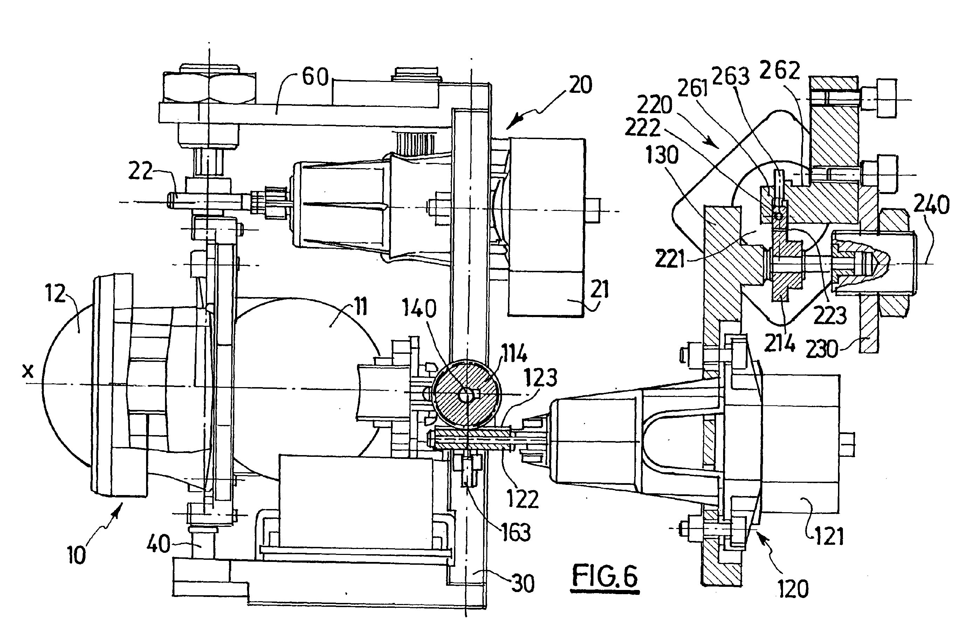

On pourra également prévoir, comme on l'a représenté sur la Figure 6, que la base 130 soit elle-même montée pivotante par rapport à un socle 230 autour d'un axe 240, la base 130 étant solidaire d'un pignon denté 214. De préférence, l'axe 240 sera choisi de te'le sorte qu'il soit perpendiculaire à l'axe optique Ox du module 10 et aux axes de rotation 40 et 140 du module 10. On pourra aussi prévoir que seulement l'un des axes de rotation 40, 140 ou 240 soit perpendiculaire à l'axe optique Ox du module d'éclairage 10. Comme précédemment, l'axe de rotation 240 sera choisi avantageusement de telle manière qu'il passe au voisinage immédiat du centre de gravité de l'ensemble à mettre en mouvement, de façon à éviter que cet axe ne subisse des contraintes trop importantes, et à limiter le couple à fournir par le moteur d'entraînement.

De manière plus précise, la base 130 est montée à pivotement autour de l'axe de rotation 240 sur un étrier (non représenté) rigidement fixé sur le socle 230. Elle est actionnée en rotation par un dispositif d'entraînement 220, qui comporte un troisième moteur 221 commandant le mouvement d'un organe de sortie 222 destiné à engrener avec le pignon denté 214. Comme dans les modes de réalisation décrits plus haut, de manière à assurer la continuité de l'engrènement mutuel entre le pignon denté 214 et l'organe de sortie 222, ce dernier est guidé entre des portées 261 et 262 du socle 230, et il est sollicité en direction du pignon denté 214 par une butée 263, qui peut être réglable, elle aussi supportée par le socle 230. On est ainsi encore assuré que l'organe de sortie 222 reste toujours en contact d'engrènement avec le pignon denté 214.

De préférence, l'organe de sortie 222 est de forme générale parallélépipédique, son mouvement est une translation linéaire, et il comporte sur l'un de ses côtés une crémaillère 223, engrenant avec les dents du pignon denté 214. Il peut aussi être de forme générale cylindrique, son mouvement étant alors une rotation, et comporter sur sa périphérie un filetage à pas non réversible, de manière à former une vis sans fin pour engrener avec les dents du pignon denté 114.

Le troisième moteur 221 est porté par le socle 230, et il est également commandé par une unité de gestion externe (non représentée), qui peut être celle qui commande les moteurs 21 ou 121, en fonction des mêmes paramètres que précédemment. Le troisième moteur 221 peut également être commandé manuellement par le conducteur du véhicule à l'aide d'un commutateur ou d'un rhéostat au tableau de bord, et être constitué d'un moteur pas à pas ou d'un moteur à courant continu.

Comme précédemment, on peut prévoir en variante que le moteur 221 soit porté par la base 130 sur laquelle est monté, indirectement, le module 10, et commande le mouvement de l'organe de sortie 222 qui engrène avec le pignon denté 214 solidaire du socle 230.

Une application particulièrement avantageuse d'un moteur commandant une rotation autour d'un axe parallèle, en position de repos, à l'axe optique Ox du module 10, réside dans le changement de sens de trafic, lorsque le module 10 émet un faisceau de croisement avec coupure aux normes européennes. On sait qu'un tel faisceau comporte une coupure horizontale du côté du trafic arrivant en sens inverse, et une coupure relevée faisant un angle de 15° avec l'horizontale de l'autre côté, cette coupure étant déterminée par le cache de coupure. Lorsqu'un véhicule est équipé de projecteurs prévus pour un trafic à droite, il est nécessaire de modifier cette répartition du faisceau pour l'inverser lorsque le véhicule se retrouve dans une circulation avec trafic à gauche. La présente invention procure un moyen simple pour effectuer cette inversion, en pilotant uniquement le moteur commandant la rotation autour d'un axe parallèle à l'axe optique Ox du module 10 pour qu'il fasse tourner le module 10 d'un angle de 15°, ce qui amène la coupure relevée à l'horizontale du côté du trafic arrivant en sens inverse, et la coupure horizontale à se relever de 15° de l'autre côté.

De même, le moteur commandant la rotation autour d'un axe parallèle à l'axe optique Ox du module 10 pourra être piloté pour faire tourner le module 10 d'un angle quelconque autour de l'axe Ox, de manière à conserver horizontale la coupure du faisceau située du côté du trafic inverse, quelle que soit la gîte du véhicule, déterminée par le sol sur lequel roule le véhicule ou la charge embarquée par celui-ci.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple qu'on pourra utiliser des réflecteurs paraboliques, à surfaces simples ou complexes, au lieu de réflecteurs elliptiques. C'est ainsi également que le module orientable selon l'invention pourra équiper l'un des projecteurs principaux du véhicule, pour l'éclairage code ou route ou un éclairage complémentaire des éclairages code ou route, ou équiper un projecteur additionnel, en faisant partie d'un bloc optique indépendant des projecteurs d'éclairage réglementaire du véhicule, comme par exemple un module de pare-chocs ou un projecteur antibrouillard. L'allumage du module d'éclairage selon la présente invention pourra être commandé par l'unité de gestion externe simultanément à la commande de mouvement, en tout ou rien ou progressivement, ou être indépendant de cette unité de gestion, le module étant par exemple allumé en permanence. De même, on pourra prévoir qu'un ou plusieurs pignons dentés fasse partie d'un train d'engrenages multiplicateur ou réducteur d'effort. Enfin, on pourra prévoir que le moteur actionnant directement le module d'éclairage fasse tourner ce dernier autour de l'axe optique, que ce moteur soit associé ou non avec d'autres moteurs.

## Revendications

1. Système d'éclairage pour projecteur de véhicule automobile comprenant sur un support (30, 130, 230) un module d'éclairage (10) comportant une source lumineuse et un réflecteur (11) pour émettre un faisceau lumineux de photométrie prédéterminée selon une direction générale définie par un axe optique (Ox) du module (10), le réflecteur (11) étant susceptible d'adopter une position angulaire comprise entre deux positions extrêmes, le module (10) étant mis en mouvement autour d'au moins un axe de rotation (40, 140, 240) par au moins un moyen d'entraînement (20, 120, 220) comprenant un moteur (21, 121, 221) actionnant un organe de sortie (22, 122, 222), l'organe de sortie (22, 122, 222) entraînant le module (10) par l'intermédiaire d'un pignon denté et étant susceptible d'être animé d'un mouvement de translation linéaire, **caractérisé en ce que** l'organe de sortie (22, 122, 222) comporte une crémaillère (23, 123, 223) engrenant avec les dents du pignon denté (14, 114, 214).

2. Système selon la revendication 1, **caractérisé en ce que** l'axe de rotation (40, 140, 240) du module (10) est perpendiculaire à l'axe optique (Ox) du module d'éclairage (10).

3. Système selon la revendication 1, **caractérisé en ce que** l'axe de rotation (40, 140, 240) du module (10) est parallèle à l'axe optique (Ox) du module d'éclairage (10)

4. Système selon la revendication 1, **caractérisé en ce que** le mouvement de l'organe de sortie (22, 122, 222) est guidé par une butée (63, 163, 263) disposée du côté de l'organe de sortie (22, 122, 222) opposé à celui par lequel il engrène avec le pignon denté (14, 114, 214).

5. Système selon l'une des revendications 1, 2 et 4, **caractérisé en ce que** l'axe de rotation (40) du module (10) est vertical.

6. Système selon l'une des revendications 1, 2 et 4, **caractérisé en ce que** l'axe de rotation (40) du module (10) est incliné par rapport à la verticale.

7. Système selon la revendication 6, **caractérisé en ce que** l'axe de rotation (40) du module (10) est incliné par rapport à la verticale d'un angle voisin de 15°.

8. Système selon la revendication 1, **caractérisé en ce que** les deux positions angulaires extrêmes du module (10) forment entre elles un angle d'environ 45°.

9. Système selon la revendication 1, **caractérisé en ce que** les deux positions angulaires extrêmes du module (10) forment entre elles un angle d'environ 90°.

10. Système selon l'une des revendications précédentes, **caractérisé en ce que** le module (10) est mis en mouvement autour de deux axes de rotation (40, 140, 240) non parallèles entre eux par des moyens d'entraînement (20, 120, 220) comprenant chacun un moteur (21, 121, 221) actionnant un organe de sortie (22, 122, 222) entraînant le module (10) par l'intermédiaire d'un pignon denté (14, 114, 214).

11. Système selon la revendication 10, **caractérisé en ce que** l'un des axes de rotation (40, 140, 240) est perpendiculaire à l'axe optique (Ox) du module (10).

12. Système selon la revendication 11, **caractérisé en ce que** les deux axes de rotation (40, 140, 240) sont perpendiculaires à l'axe optique (Ox) du module (10).

13. Système selon l'une des revendications 1 à 9, **caractérisé en ce que** le module (10) est mis en mouvement autour de trois axes de rotation (40, 140, 240) non parallèles entre eux par des moyens d'entraînement (20, 120, 220) comprenant chacun un moteur (21, 121, 221) actionnant un organe de sortie (22, 122, 222) entraînant le module (10) par l'intermédiaire d'un pignon denté (14, 114, 214).

14. Système selon la revendication 13, **caractérisé en ce que** les trois axes de rotation (40, 140, 240) du module (10) sont perpendiculaires entre eux.

15. Système selon l'une des revendications précédentes, **caractérisé en ce que** le pignon denté (14, 114, 214) fait partie d'un train d'engrenages multiplicateur ou réducteur d'effort.

16. Système selon l'une des revendications 1 à 15, **caractérisé en ce que** un organe de sortie (22, 122, 222) est susceptible d'être animé d'un mouvement de rotation, et comporte une vis sans fin engrenant avec les dents du pignon denté (14, 114, 214).

17. Système selon l'une des revendications 1 à 15, **caractérisé en ce que** au moins un axe de rotation (40, 140, 240) du module (10) passe au voisinage immédiat du centre de gravité de l'ensemble à mettre en mouvement.

18. Système selon l'une des revendications 1 à 15, **caractérisé en ce que** le support (30, 130, 230) est orientable en site et en azimut, par des moyens manuels ou électriques.

19. Système selon l'une des revendications 1 à 15, **caractérisé en ce que** le pignon denté (14, 114, 214) est solidaire du module (10) ou du support (30, 130, 230) sur lequel est monté le module (10).

20. Système selon l'une des revendications 1 à 15, **caractérisé en ce que** le moteur (21, 121, 221) est solidaire du module (10) ou du support (10, 30, 130) sur lequel est monté le module (10).
